# EUROPEAN PATENT APPLICATION

(11) **EP 3 922 399 A2**
(43) Date of publication of application: **15.12.2021**
(21) Application number: 21176596.1
(22) Date of filing: 28.05.2021
(51) Int. Cl.: B23K 26/361

(54) **LASER PROCESSING APPARATUS AND PROCESSING METHOD**

(30) Priority: 12.06.2020 JP 2020102288
(71) Applicant: OMRON Corporation, Shiokoji-dori, Shimogyo-ku, Kyoto-shi Kyoto 600-8530 (JP)
(72) Inventor: YOSHITAKE, Naoki, Kyoto-shi, 600-8530 (JP); ASHIHARA, Yoshimitsu, Kyoto-shi, 600-8530 (JP); SAKAMOTO, Tatsunori, Kyoto-shi, 600-8530 (JP); TSUCHIMICHI, Kazumi, Kyoto-shi, 600-8530 (JP); YOKOI, Tadamasa, Kyoto-shi, 600-8530 (JP)
(74) Representative: Mewburn Ellis LLP

(57) **Abstract**

A laser processing apparatus (1, 1B) comprises: an exposure unit (26, 26B) adapted to expose a workpiece (8) to a laser beam (W); a reception unit (216) adapted to receive a processing pattern and a condition for exposure to the laser beam (W); and a control unit (211) adapted to control exposure to the laser beam (W). After the workpiece (8) is processed based on the processing pattern, the control unit (211) subjects the workpiece (8) to deburring in a processing pattern identical to that applied in processing the workpiece (8), with the laser beam (W) focused to a position shifted from a processed surface of the workpiece (8).

## Description

### BACKGROUND OF THE INVENTION

### Field of the Invention

The present disclosure relates to a laser processing apparatus and a processing method.

### Description of the Background Art

A laser processing apparatus for processing a workpiece using a laser beam is known. One laser processing apparatus is a laser marker. Laser markers use a laser beam to mark characters, figures, etc. on a surface of a workpiece. In the field of laser markers, processing with large power is required so that printed marks do not disappear. However, when large power is used to process a workpiece, the workpiece has a portion raised around a printed portion (hereinafter also referred to as "burr"). Some workpieces may be affected in performance and reliability by even a slightly raised portion. For example, for a component which may come into contact with another component, a raised portion causes scar, dust, and the like resulting in impaired performance and reliability. Accordingly, in order to reduce an effect caused as a portion around a printed portion is raised, an approach has been taken to previously dig down a workpiece, which takes time and effort as the workpiece has a surface entirely dug down.

Japanese Patent Application Laid-Open No. 2018-202420 discloses a laser processing method in which when laser beam exposure is performed a plurality of times a scanning path of laser beam exposure performed at least after laser beam exposure performed for a first time is shifted from that of the previous laser beam exposure so that the shifted scanning path covers a burr produced by the previous laser beam exposure outside a region to be processed.

### SUMMARY OF INVENTION

According to the technique described in Japanese Patent Application Laid-Open No. 2018-202420, after printing with a laser marker is done, a printing line is shifted and laser processing is thus performed to reduce burrs. However, for a processing pattern such as a QR code (registered trademark) or the like, there is a large amount of peripheral portion (around a printed portion), and it would take time to perform deburring while shifting a printing line.

An object of the present disclosure is to provide a laser processing apparatus and a processing method capable of minimizing a period of time required for deburring.

A laser processing apparatus according to the present disclosure comprises: an exposure unit adapted to expose a workpiece to a laser beam; a reception unit adapted to receive a processing pattern for the workpiece and a condition for exposure to the laser beam; and a control unit adapted to control exposure to the laser beam based on the processing pattern and condition for exposure received at the reception unit. After the workpiece is processed based on the processing pattern, the control unit subjects the workpiece to deburring in a processing pattern identical to that applied in processing the workpiece, with a laser beam focused to a position shifted from a processed surface of the workpiece.

According to the above disclosure, deburring can be performed with large power and hence in a minimal period of time. Further, deburring is performed in the same processing pattern as that applied in processing a workpiece, and when this is compared with deburring a peripheral portion for each printed region, the former can relatively suppress the number of laser beam scanning lines, and as a result, allows deburring to be performed in a minimal period of time.

In the above disclosure, the control unit performs the deburring while increasing the output power of the laser beam to be larger than when processing the workpiece.

According to the above disclosure, deburring can be performed with large power and hence in a minimal period of time.

In the above disclosure, the control unit performs deburring with the laser beam focused to a position shifted toward the exposure unit from the processed surface of the workpiece.

According to the above disclosure, deburring can be performed without affecting primary processing.

In the above disclosure, the control unit determines as a prescribed area an area of the processing pattern received at the reception unit in which a processing gap results at a portion exposed to a plurality of laser beams and thus processed for printing, and the control unit subjects the prescribed area to deburring.

According to the above disclosure, an area to be deburred can be minimized as required and a period of time required for deburring can be minimized.

In the above disclosure, an area in which a processing gap results at a portion exposed to a plurality of laser beams and thus processed for printing is an area of a pattern in which an interval of exposure to a laser beam is larger than √2/2 times a diameter of processing by exposure to the laser beam.

According to the above disclosure, an area to be deburred can be minimized as required and a period of time required for deburring can be minimized.

In the above disclosure, the control unit determines the prescribed area based on an output of a laser beam applied when processing the workpiece.

According to the above disclosure, an area to be deburred can be determined in accordance with an output of a laser beam applied when processing the workpiece.

In the above disclosure, the control unit determines the prescribed area based on image data of the workpiece processed in the processing pattern.

According to the above disclosure, an area to be deburred can be determined in accordance with a processing pattern of the workpiece actually processed.

In the above disclosure, the control unit calculates an amount by which a focusing position of the laser beam is shifted based on the output of the laser beam applied when processing the workpiece.

According to the above disclosure, the amount by which the focusing position of the laser beam is shifted can be determined in accordance with the output of the laser beam applied when processing the workpiece.

In the above disclosure, the control unit calculates an amount by which the focusing position of the laser beam is shifted based on material of the workpiece.

According to the above disclosure, the amount by which the focusing position of the laser beam is shifted can be determined in accordance with material of the workpiece.

In the above disclosure, the control unit calculates an amount by which the focusing position of the laser beam is shifted based on image data of the workpiece processed in the processing pattern.

According to the above disclosure, the amount by which the focusing position of the laser beam is shifted can be determined in accordance with the processing pattern of the workpiece actually processed.

A processing method according to the present disclosure is a processing method using a laser processing apparatus. The laser processing apparatus comprises: an exposure unit adapted to expose a workpiece to a laser beam; a reception unit adapted to receive a processing pattern for the workpiece and a condition for exposure to the laser beam; and a control unit adapted to control exposure to the laser beam based on the processing pattern and condition for exposure received at the reception unit. The processing method comprises: processing the workpiece based on the processing pattern and condition for exposure received at the reception unit; and after the workpiece is processed based on the processing pattern, deburring the workpiece in a processing pattern identical to that applied in processing the workpiece, with a laser beam focused to a position shifted from a processed surface of the workpiece.

According to the above disclosure, deburring can be performed with large power and hence in a minimal period of time. Further, deburring is performed in the same processing pattern as that applied in processing a workpiece, and when this is compared with deburring a peripheral portion for each printed region, the former can relatively suppress the number of laser beam scanning lines, and as a result, allows deburring to be performed in a minimal period of time.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 shows a schematic configuration of a laser marker.
Fig. 2 specifically shows a configuration of a laser marker.
Fig. 3 is a configuration diagram showing hardware included in a control board.
Fig. 4 is a diagram showing a user interface displayed on a display device by a controller.
Fig. 5 is a flowchart of a deburring process by a controller.
Fig. 6 is a diagram showing a focusing position of a laser beam for primary processing.
Fig. 7 is a diagram showing dots and burrs produced on a workpiece by exposure to a laser beam.
Fig. 8 shows a focusing position of a laser beam in deburring.
Fig. 9 is a diagram showing a mechanism for shifting a focusing position of a laser beam.
Fig. 10 is a diagram summarizing deburring by a laser marker of the present embodiment and that by a laser marker as compared to the laser marker of the present embodiment.
Fig. 11 shows a configuration of a laser marker in a modified example.
Fig. 12 is a flowchart showing a modified example of the deburring process performed by the controller.

### DESCRIPTION OF THE PREFERRED EMBODIMENTS

The present invention will now be specifically described in embodiments with reference to the drawings. Note that in the figures, identical or corresponding components are identically denoted, and accordingly, will not be described repeatedly.

### [Exemplary Application]

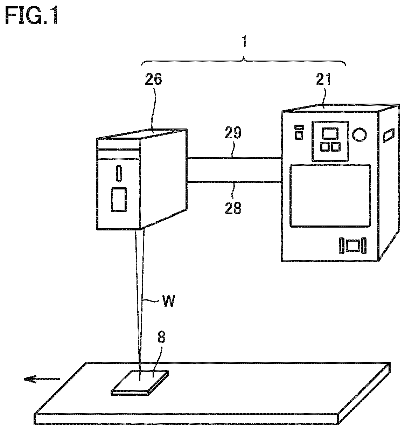

First, an example of a situation to which the present invention is applied will be described. The situation to which the present invention is applied is a situation in which a portion of a workpiece 8 (see Fig. 1) that is raised around a printed portion by primary processing (hereinafter also referred to as "burr") is removed by a laser marker 1 (corresponding to a "laser processing apparatus," see Fig. 1). In such a situation, laser marker 1 shifts a focusing position of a laser beam W (see Fig. 1) from a primarily processed surface, and performs deburring in the same processing pattern as in the primary processing. Accordingly, the focusing position of laser beam W for the deburring is shifted from the processed surface, and the primary processing is not affected even when the deburring is performed without decreasing output power of laser beam W. Thus, laser marker 1 can perform deburring with large power, and hence in a minimal period of time. Further, laser marker 1 subjects an area in which a processing gap results to deburring in the same processing pattern as that applied in processing a workpiece, and when this is compared with deburring a peripheral portion for each printed region, the former can relatively suppress the number of laser beam W scanning lines, and as a result, allows deburring to be performed in a minimal period of time.

Hereinafter, a more specific exemplary application of the present embodiment will be described. Hereinafter, a laser marker will be described as an example of the laser processing apparatus. Note that in addition to a function of marking characters, symbols, and the like, the laser marker according to the present embodiment may also have a function of punching, peeling, cutting and the like.

### [General Configuration of Laser Marker 1]

Fig. 1 shows a schematic configuration of laser marker 1. Referring to Fig. 1, laser marker 1 processes a workpiece 8 by exposing it to laser beam W. Laser marker 1 has a controller 21 and a marking head 26 (corresponding to an "exposure unit").

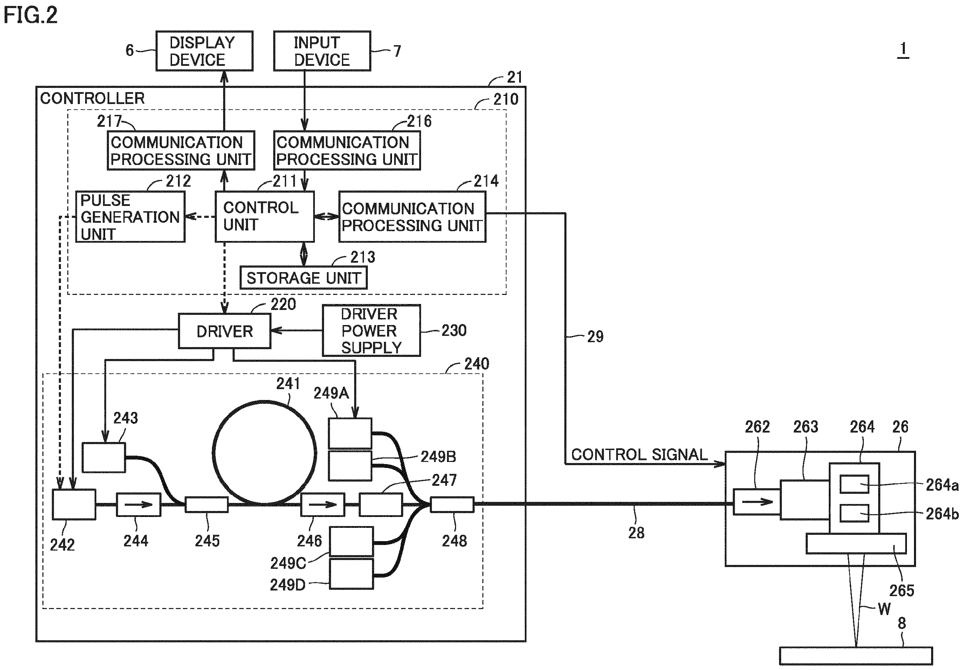

Controller 21 controls operation of marking head 26. Although controller 21 will more specifically be described hereinafter with reference to Fig. 2, controller 21 includes a laser oscillator adapted to oscillate laser beam W.

Marking head 26 is controlled by controller 21 to expose workpiece 8 to laser beam W to thus process workpiece 8. Marking head 26 is connected via an optical fiber 28 to an oscillator provided inside controller 21. Further, marking head 26 is connected to controller 21 via a communication cable 29. Specifically, marking head 26 is connected via communication cable 29 to a control board provided inside controller 21. Marking head 26 specifically has a configuration, which will be described hereinafter with reference to Fig. 2.

### [Specific Configuration of Laser Marker 1]

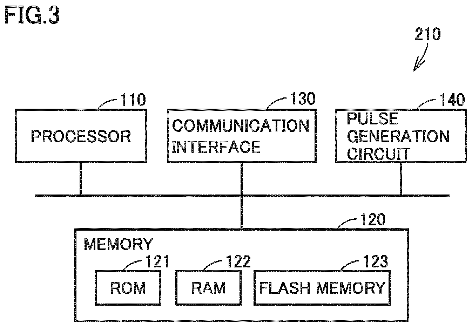

A configuration of laser marker 1 will more specifically be described with reference to Figs. 2 and 3. Fig. 2 specifically shows a configuration of laser marker 1. Laser marker 1 has controller 21 and marking head 26. Controller 21 includes a laser oscillator 240, a control board 210, a driver 220, and a driver power supply 230. A display device 6 and an input device 7 can be connected to controller 21. Display device 6 and input device 7 are used in an aspect in which a user changes a setting in controller 21 or the like.

Laser oscillator 240 includes an optical fiber 241, semiconductor lasers 242, 243 and 249A-249D, isolators 244 and 246, couplers 245 and 248, and a band pass filter 247.

Semiconductor laser 242 is a seed light source adapted to emit seed light. Semiconductor laser 242 is driven by driver 220 to emit pulsed seed light.

Isolator 244 transmits only light in one direction and blocks light incident in a direction opposite to the light in one direction. Specifically, isolator 244 passes the seed light emitted from semiconductor laser 242 and blocks light which returns from optical fiber 241. This can prevent damage to semiconductor laser 242.

Semiconductor laser 243 is an excitation light source that emits excitation light for exciting a rare earth element added to a core of optical fiber 241.

Coupler 245 combines the seed light from semiconductor laser 242 and the excitation light from semiconductor laser 243 together, and causes the combined light to enter optical fiber 241.

The excitation light entering optical fiber 241 from semiconductor laser 243 via coupler 245 is absorbed by the rare earth element contained in the core of optical fiber 241. Thus, the rare earth element is excited, and population inversion is obtained. In this state, when the seed light from semiconductor laser 242 enters the core of optical fiber 241, stimulated emission occurs. The stimulated emission amplifies the seed light (or pulsed light). That is, the seed light is amplified when the seed light and the excitation light enter a fiber amplifier constituted by optical fiber 241.

Isolator 246 passes the pulsed light output from optical fiber 241 and blocks light which returns to optical fiber 241.

Band pass filter 247 is configured to pass light of a prescribed wavelength band. Specifically, a "prescribed wavelength band" is a wavelength band including a peak wavelength of the pulsed light output from optical fiber 241. When spontaneous emission light is emitted from optical fiber 241, the spontaneous emission light is removed by band pass filter 247.

The laser beam having passed through band pass filter 247 passes through coupler 248 and thus enters optical fiber 28 provided for transmitting the laser beam. Semiconductor lasers 249A to 249D emit excitation light in order to amplify in optical fiber 28 the laser beam having passed through band pass filter 247. That is, optical fiber 28 configures a fiber amplifier by combining coupler 248 and an isolator 262 described hereinafter, as a fiber amplifier is composed of coupler 245, optical fiber 241, and isolator 246.

Coupler 248 combines together the pulsed light having passed through band pass filter 247 and the light emitted from the semiconductor lasers 249A to 249D, and causes the combined light to enter optical fiber 28.

The configuration of laser oscillator 240 shown in Fig. 2 is an example, and the present invention is not limited thereto. For example, laser oscillator 240 may exclude band pass filter 247 insofar as a laser beam of a prescribed wavelength band can be obtained.

Control board 210 includes a control unit 211, a pulse generation unit 212, a storage unit 213, and communication processing units 214, 216, and 217.

Control unit 211 generally controls operation of controller 21 by controlling pulse generation unit 212 and driver 220. Specifically, control unit 211 generally controls operation of controller 21 by executing an operating system and an application program stored in storage unit 213. Thus, laser beam W is emitted from marking head 26 to expose workpiece 8 thereto.

Pulse generation unit 212 generates an electrical signal having a prescribed repetition frequency and a prescribed pulse width. Pulse generation unit 212 is controlled by control unit 211 to output and stop outputting an electrical signal. The electrical signal output from pulse generation unit 212 is supplied to semiconductor laser 242.

Storage unit 213 has a variety of data stored therein in addition to the operating system and the application program.

Communication processing unit 214 is an interface for communicating with marking head 26. Control unit 211 transmits a control signal to marking head 26 via communication processing unit 214 and communication cable 29.

Communication processing unit 216 (corresponding to a "reception unit") receives an input from input device 7. Input device 7 is a variety of pointing devices (e.g., a mouse, a touch pad, etc.), a keyboard, etc. Communication processing unit 216 notifies control unit 211 of the received input.

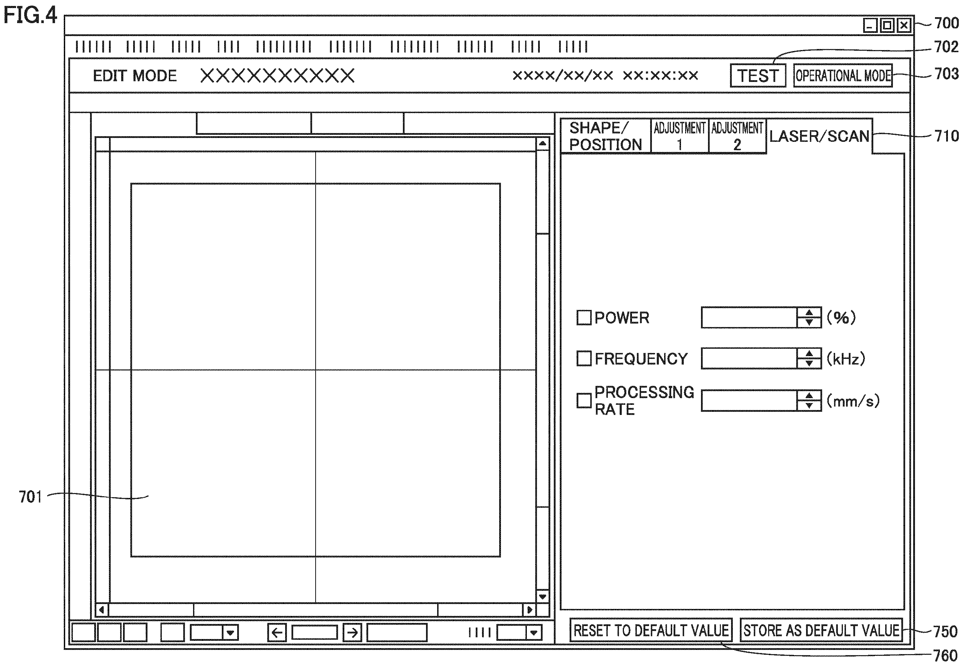

Communication processing unit 217 transmits image data generated by control unit 211 to display device 6. In this case, display device 6 displays an image (a user interface) based on the image data. An example of the user interface displayed on display device 6 will be described hereinafter with reference to Fig. 4.

Driver power supply 230 supplies power to driver 220. Thus, driver 220 supplies a driving current to semiconductor lasers 242, 243, and 249A-249D. Semiconductor lasers 242, 243, and 249A-249D lase as they receive the driving current. The driving current supplied to semiconductor laser 242 is modulated by an electrical signal output from pulse generation unit 212. Thus, semiconductor laser 242 oscillates in a pulsing manner and outputs pulsed light having a prescribed repetition frequency and a prescribed pulse width as seed light. In contrast, semiconductor lasers 243 and 249A to 249D are each supplied with a continuous driving current by driver 220. Thus, semiconductor lasers 243 and 249A to 249D each continuously oscillate and output continuous light as excitation light.

Marking head 26 includes isolator 262, a collimator lens 263, a galvanomirror unit 264 (a galvanomirror 264a in an x direction and a galvanomirror 264b in a y direction), and a condenser lens 265. Isolator 262 passes the pulsed light output from optical fiber 28 and blocks light which returns to optical fiber 28. The pulsed light having passed through isolator 262 is output into the atmosphere from collimator lens 263 accompanying isolator 262 and enters galvanomirror unit 264. Condenser lens 265 condenses laser beam W having entered galvanomirror unit 264. Galvanomirror unit 264 scans laser beam W in at least one of a direction along a first axis (specifically, an axis parallel to an arrow indicated in Fig. 1) and a direction along a second axis orthogonal to the first axis.

Fig. 3 is a configuration diagram showing hardware included in control board 210. Referring to Fig. 3, control board 210 includes a processor 110, a memory 120, a communication interface 130, and a pulse generation circuit 140.

Memory 120 is configured for example with a ROM (Read Only Memory) 121, a RAM (Random Access Memory) 122, and a flash memory 123 included. Flash memory 123 has the aforementioned operating system, application program, and variety of data stored therein. Memory 120 corresponds to storage unit 213 shown in Fig. 2.

Processor 110 generally controls operation of controller 21. Control unit 211 shown in Fig. 2 is implemented by processor 110 executing the operating system and application program stored in memory 120. When the application program is executed, the variety of data stored in memory 120 is referenced.

Communication interface 130 is provided for communicating with an external device (e.g., marking head 26, display device 6, and input device 7). Communication interface 130 corresponds to communication processing units 214, 216, and 217 shown in Fig. 2.

Pulse generation circuit 140 corresponds to pulse generation unit 212 shown in Fig. 2. That is, pulse generation circuit 140 generates an electrical signal having a prescribed repetition frequency and a prescribed pulse width in response to a command issued from processor 110.

Note that the hardware configuration shown in Fig. 3 is merely an example, and the present invention is not limited thereto.

### [Pre-Registration]

Fig. 4 is a diagram showing a user interface 700 displayed on display device 6 (see Fig. 2) by controller 21 (see Fig. 2). User interface 700 is implemented by control unit 211 (see Fig. 2) executing an application program stored in storage unit 213 (see Fig. 2). An input operation performed by a user at input device 7 via user interface 700 is received by communication processing unit 216, and control unit 211 is notified of the received input.

Control unit 211 can switch a screen mode in accordance with a user operation. Fig. 4 shows a screen in an edit mode used to create and edit marking data. When control unit 211 receives a user operation of clicking a button 703, control unit 211 switches a screen from a screen in the edit mode to a screen in an operational mode used when marking (or processing) is actually performed. When control unit 211 receives a user operation of clicking a button displayed on the screen in the operational mode, control unit 211 switches the screen in the operational mode to the screen in the edit mode.

When control unit 211 receives a user operation of clicking a button 702, control unit 211 causes display device 6 to display a test marking screen. Thus, the user can confirm created and edited marking data on display device 6.

Control unit 211 receives an input of a marking pattern (or a processing pattern), such as a letter, a geometrical figure, a symbol or the like to be marked. The processing pattern is drawn by a user using a drawing area 701. A coordinate system including an x axis and a y axis is set in drawing area 701. Control unit 211 specifies in the coordinate system the processing pattern input by the user. That is, control unit 211 receives as positional information the processing pattern input by the user.

Control unit 211 receives a setting of a condition for exposure to laser beam W (see Fig. 1) while a laser/scanning tab 710 is selected. Laser/scanning tab 710 includes fields for entering an output power for laser beam W, a frequency for laser beam W, and a processing rate. When numerical values are entered to the fields of "power," "frequency," and "processing rate," control unit 211 sets the entered numerical values as an output power of laser beam W, a frequency of laser beam W, and a processing rate.

When control unit 211 receives a user operation of clicking a button 750, control unit 211 stores content (or setting) input by the user as a default value. When control unit 211 receives a user operation of clicking a button 760, control unit 211 resets the content (or setting) input by the user to a default value.

Control unit 211 can write content (or setting) input by the user to an external memory for example in the form of a file, or can also transmit it to an external device. This allows these settings to be transferred to a laser marker other than laser marker 1.

Control unit 211 causes laser beam W to be emitted based on a processing pattern and a condition for exposure to laser beam W, as input by the user, to expose workpiece 8 thereto to process workpiece 8 (see Fig. 1). Control unit 211 determines an area to be deburred, based on the processing pattern applied when processing workpiece 8, and subjects the determined area of workpiece 8 to deburring. Hereinafter, deburring by laser marker 1 will be described.

### [Deburring]

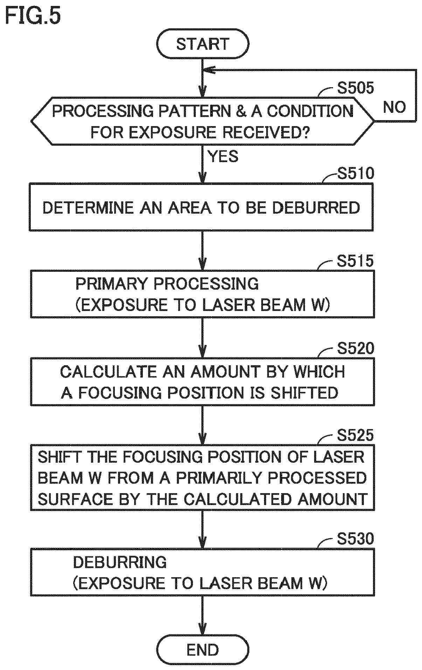

Deburring by laser marker 1 (see Fig. 1) will be described with reference to Figs. 5 to 10. Fig. 5 is a flowchart of a deburring process performed by controller 21 (see Fig. 1). The Fig. 5 process is implemented by control unit 211 (see Fig. 2) executing an application program stored in storage unit 213 (see Fig. 2).

Initially, control unit 211 determines whether a processing pattern for workpiece 8 (see Fig. 1) and a condition for exposure to laser beam W (see Fig. 1) have been received (step S505). The processing pattern for workpiece 8 and the condition for exposure to laser beam W are input by a user via user interface 700 (see Fig. 4). Communication processing unit 216 (see Fig. 2) receives an input operation done by the user and notifies control unit 211 of the received content. When the processing pattern for workpiece 8 and the condition for exposure to laser beam W are received (YES in step S505), control unit 211 proceeds to step S510.

In step S510, control unit 211 determines an area to be deburred based on a processing pattern received at communication processing unit 216. In addition to the processing pattern received at communication processing unit 216, control unit 211 may determine an area to be deburred based on a condition received at communication processing unit 216 for exposure to laser beam W. The condition for exposure to laser beam W is, for example, a condition for outputting laser beam W, such as an output power of laser beam W, a frequency of laser beam W, and a processing rate.

Subsequently, based on the received processing pattern for workpiece 8 and condition for exposure to laser beam W, control unit 211 causes laser beam W to be emitted to expose workpiece 8 thereto to process workpiece 8 (that is, performs primary processing) (step S515).

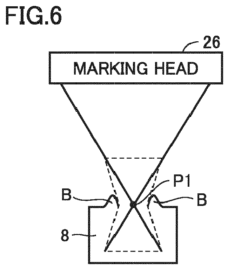

Reference will now be made to Fig. 6 to describe a focusing position of laser beam W (see Fig. 1) in the primary processing. Fig. 6 is a diagram showing a focusing position PI of laser beam W in the primary processing. As shown in Fig. 6, in the primary processing, focusing position PI of laser beam W is set on a surface to be processed of workpiece 8. When workpiece 8 has a portion exposed to laser beam W for printing, workpiece 8 has a burr B resulting around the printed portion. Note that focusing position PI of laser beam W in the primary processing may be shifted from the surface to be processed of workpiece 8.

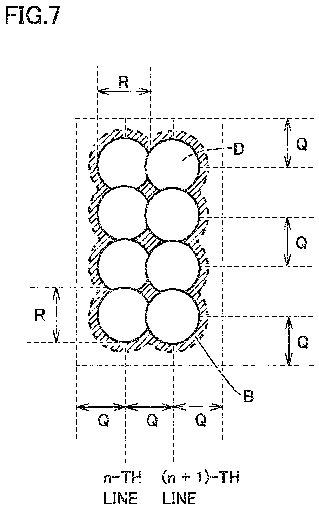

Further, with reference to Fig. 7, an area to be deburred will be described. Fig. 7 is a diagram showing dots D and burrs B produced on workpiece 8 (see Fig. 1) by exposure to laser beam W (see Fig. 1). As shown in Fig. 7, when laser beam W is emitted at an interval Q smaller than a diameter R of processing by exposure to laser beam W, dots D formed on workpiece 8 overlap and thus form a line. Burr B results around a printed portion (or dot D). In the Fig. 7 example, burr B results: between an n-th line and an (n + 1)-th line, where n is an integer of 1 or larger; on a left side of the n-th line; at a portion at which the n-th line starts; at a portion at which the n-th line ends; on a right side of the (n + 1)-th line; at a portion at which the (n + 1)-th line starts; and at a portion at which the (n + 1)-th line ends. The area with burr B is a processing gap, and is an area of a pattern in which an interval Q of exposure to laser beam W is larger than √2/2 times diameter R of processing by exposure to laser beam W.

When no processing gap results between the n-th line and the (n + 1)-th line, a burr resulting through processing for the n-th line is removed by processing for the (n + 1)-th line. Accordingly, laser marker 1 (see Fig. 1) determines an area in which a processing gap results at a portion exposed to a plurality of laser beams W and thus processed for printing, that is, an area of a pattern in which interval Q of exposure to laser beam W is larger than √2/2 times diameter R of processing by exposure to laser beam W, as an area to be deburred. Herein, the processing gap is intended to be a gap resulting at a portion exposed to a plurality of laser beams W and thus processed for printing, and it is not intended to be a portion of a processing pattern that is not subject to printing (or a required blank). In addition, an area to be deburred may be an area in which a processing gap results at a portion exposed to a plurality of laser beams W and thus processed for printing, and interval Q of exposure to laser beam W and diameter R of processing by exposure to laser beam W may have a relationship therebetween with some error included therein.

From the processing pattern received at communication processing unit 216 (see Fig. 2), control unit 211 (see Fig. 2) calculates interval Q of exposure to laser beam W and diameter R of processing by exposure to laser beam W, and determines an area to be deburred. In addition to the processing pattern received at communication processing unit 216, control unit 211 may use a condition received at communication processing unit 216 for exposure to laser beam W (e.g., an output power for laser beam W, a frequency for laser beam W, a processing rate, etc.) to calculate interval Q of exposure to laser beam W and diameter R of processing by exposure to laser beam W, and may determine an area to be deburred accordingly.

Referring to Fig. 5 again, control unit 211 calculates an amount by which a focusing position of laser beam W is shifted based on an output of laser beam W (an output power of laser beam W, a frequency of laser beam W and a processing rate) applied in primary processing (step S520). The output of laser beam W in primary processing is a condition received at communication processing unit 216 for exposure to laser beam W (e.g., an output power for laser beam W, a frequency for laser beam W, a processing rate, etc.). From the output of laser beam W in the primary processing (an output power of laser beam W, a frequency of laser beam W, and a processing rate), control unit 211 calculates a burr's raised amount, and uses the calculated amount to calculate an amount by which a focusing position of laser beam W is shifted. Control unit 211 may calculate the amount by which the focusing position of laser beam W is shifted based on the output of laser beam W in the primary processing and a material of workpiece 8. In this case, control unit 211 calculates a burr's raised amount from the output of laser beam W in the primary processing and the material of workpiece 8, and uses the calculated amount to calculate an amount by which the focusing position of laser beam W is shifted.

Subsequently, control unit 211 shifts the focusing position of laser beam W from a primarily processed surface by the amount calculated in step S520 (step S525).

Subsequently, control unit 211 exposes the area determined in step S510 to laser beam W with an output power similar to that applied in the primary processing (or deburrs the area) (step S530). Since in step S525 the focusing position of laser beam W is shifted from a primarily processed surface, exposure to laser beam W with an output power similar to that applied in the primary processing does not affect the primary processing. Further, exposure to laser beam W with an output power similar to that applied in the primary processing can reduce a period of time required for deburring. Further, deburring is performed in the same processing pattern as that applied in processing a workpiece, and when this is compared with deburring a peripheral portion for each printed region, the former can relatively suppress the number of laser beam W scanning lines, and as a result, allows deburring to be performed in a minimal period of time.

Note that control unit 211 may expose the area determined in step S510 to laser beam W having an output power increased to be larger than that in the primary processing. This can reduce a period of time required for deburring. Further, when workpiece 8 is of metal or the like, it tends to be difficult to deburr, however, deburring with laser beam W having an output power increased to be larger than that in the primary processing can also remove a burr difficult to be removed.

After step S530, control unit 211 ends a series of steps shown in Fig. 5. While in Fig. 5 an amount by which a focusing position of laser beam W is shifted is calculated (S520) after the primary processing, it may be calculated together with determining an area to be deburred. Further, determining an area to be deburred and calculating an amount by which a focusing position of laser beam W is shifted may be performed after the primary processing.

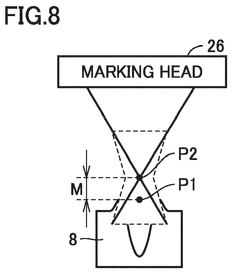

Fig. 8 is a diagram showing a focusing position P2 of laser beam W (see Fig. 1) in deburring. As shown in Fig. 8, in deburring, focusing position P2 of laser beam W is set at a position shifted toward marking head 26 from a primarily processed surface by the amount (a shifted amount M) calculated in step S520 (see Fig. 5). More specifically, focusing position P2 of laser beam W in deburring is set to a position shifted from focusing position PI of laser beam W in the primary processing toward marking head 26 by the amount (shifted amount M) calculated in step S520. As laser beam W is focused to a position shifted from a primarily processed surface, laser beam W scanned on a scanning line similar to that in the primary processing with an output power similar to that in the primary processing impinges only on burr B (see Fig. 6) produced in the primary processing and does not impinge on a primarily processed portion, and can thus remove burr B alone without affecting the primary processing.

In deburring, applying laser beam W only to burr B produced through the primary processing while avoiding applying laser beam W to a primarily processed portion suffices, and accordingly, focusing position P2 of laser beam W in deburring may be shifted from a primarily processed surface toward a bottom surface of workpiece 8 by the amount (shifted amount M) calculated in step S520.

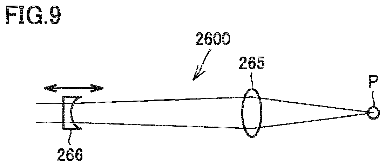

Fig. 9 is a diagram showing a mechanism for shifting a focusing position of laser beam W (see Fig. 1). An optical system 2600 is a mechanism for shifting a focusing position of laser beam W. Optical system 2600 includes a movable lens 266 and a condenser lens 265. Movable lens 266 is movable in a direction along an optical axis within a prescribed movability range to adjust a distance between movable lens 266 and condenser lens 265. Increasing the distance between movable lens 266 and condenser lens 265 reduces the focal length of optical system 2600. That is, increasing the distance between movable lens 266 and condenser lens 265 can reduce the distance between condenser lens 265 and focusing position P of laser beam W. On the other hand, reducing the distance between movable lens 266 and condenser lens 265 increases the focal length of optical system 2600. That is, reducing the distance between movable lens 266 and condenser lens 265 can increase the distance between condenser lens 265 and focusing position P of laser beam W.

In deburring, control unit 211 (see Fig. 2) moves movable lens 266 to increase the distance between movable lens 266 and condenser lens 265 to shift focusing position P of laser beam W toward marking head 26 (see Fig. 1) from a primarily processed surface. Note that control unit 211 in deburring may move movable lens 266 to reduce the distance between movable lens 266 and condenser lens 265 to shift focusing position P of laser beam W toward a bottom surface of workpiece 8 (see Fig. 1) from a primarily processed surface.

While Fig. 9 shows two lenses (movable lens 266 and condenser lens 265) used to change a focusing position of laser beam W, three or more lenses may be used to do so.

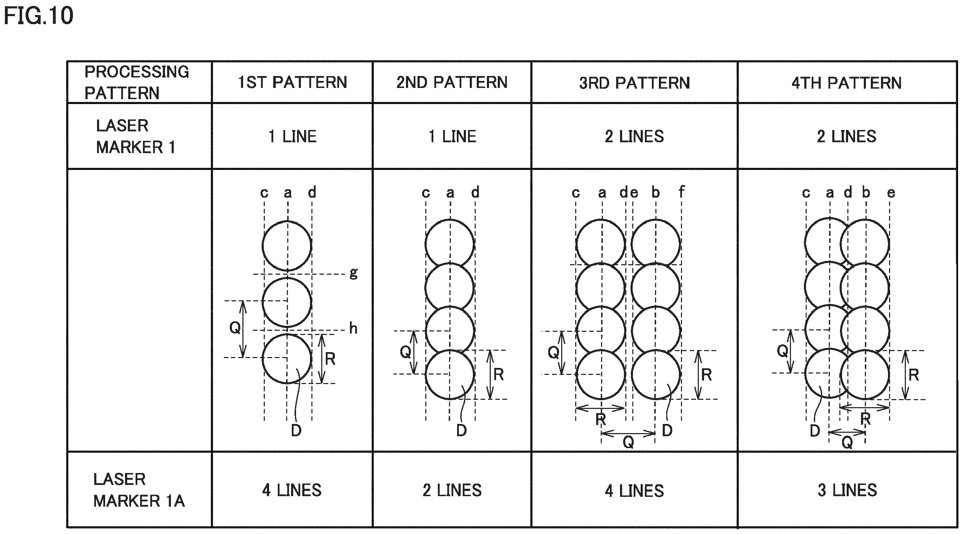

Reference will now be made to Fig. 10 to describe the deburring shown in Fig. 5, as compared with deburring performed by a laser marker 1A compared with laser marker 1 according to the present embodiment. Fig. 10 is a diagram summarizing deburring by laser marker 1 according to the present embodiment and that by laser marker 1A as compared to laser marker 1 according to the present embodiment. Laser marker 1A in deburring deburrs a peripheral portion for each printed region. Accordingly, laser marker 1A scans a laser beam along a path different from a scanning path followed in the primary processing (i.e., along a path shifted from the scanning path followed in the primary processing).

A first processing pattern and a second processing pattern are patterns to expose workpiece 8 to a plurality of laser beams W (see Fig. 1) to form a single line *a* on workpiece 8 (see Fig. 1) (more specifically, a single line of dots D for the first processing pattern). In the first processing pattern, interval Q of exposure to laser beam W is larger than diameter R of processing by exposure to laser beam W, whereas in the second processing pattern, interval Q of exposure to laser beam W is smaller than diameter R of processing by exposure to laser beam W.

When the primary processing is performed in the first processing pattern or the second processing pattern, laser marker 1 according to the present embodiment can shift a focusing position of laser beam W from a primarily processed surface and scan laser beam W in the same processing pattern as in the primary processing, that is, on line *a,* to remove only burrs produced in the primary processing. On the other hand, when laser marker 1A compared with laser marker 1 of the present embodiment performs the primary processing in the first processing pattern, laser marker 1A needs to scan laser beam W on lines *c, d, g,* and *h* in order to remove burrs produced in the primary processing. Further, when laser marker 1A compared with laser marker 1 of the present embodiment performs the primary processing in the second processing pattern, laser marker 1A needs to scan laser beam W on lines c and *d* in order to remove burrs produced in the primary processing.

Thus, when the primary processing is performed in the first processing pattern, laser marker 1A needs to scan laser beam W in four lines in order to remove burrs, whereas laser marker 1 only needs to scan laser beam W in one line. When the primary processing is performed in the second processing pattern, laser marker 1A needs to scan laser beam W in two lines in order to remove burrs, whereas laser marker 1 only needs to scan laser beam W in one line. Laser marker 1 can suppress the number of laser beam W scanning lines in deburring, and hence minimize a period of time required for deburring.

A third processing pattern and a fourth processing pattern are patterns to expose workpiece 8 to a plurality of laser beams W to form two lines (lines *a* and *b*) on workpiece 8. The third and fourth processing patterns have a processing gap between a first line and a second line. In the third processing pattern, an interval between the first and second lines (interval Q of exposure to laser beam W) is larger than diameter R of processing by exposure to laser beam W, whereas in the fourth processing pattern, an interval between the first and second lines (interval Q of exposure to laser beam W) is smaller than diameter R of processing by exposure to laser beam W.

When the primary processing is performed in the third or fourth processing pattern, laser marker 1 according to the present embodiment can shift a focusing position of laser beam W from a primarily processed surface and scan laser beam W in the same processing pattern as in the primary processing, that is, on lines *a* and *b,* to remove only burrs produced in the primary processing. On the other hand, when laser marker 1A compared with laser marker 1 of the present embodiment performs the primary processing in the third processing pattern, laser marker 1A needs to scan laser beam W on lines c, *d, e,* and *f* in order to remove burrs produced in the primary processing. When the primary processing is performed in the fourth processing pattern, laser marker 1A compared with laser marker 1 of the present embodiment needs to scan laser beam W on lines c, *d,* and e in order to remove burrs produced in the primary processing.

Thus, when the primary processing is performed in the third processing pattern, laser marker 1A needs to scan laser beam W in four lines in order to remove burrs, whereas laser marker 1 only needs to scan laser beam W in two lines. When the primary processing is performed in the fourth processing pattern, laser marker 1A needs to scan laser beam W in three lines in order to remove burrs, whereas laser marker 1 only needs to scan laser beam W in two lines. Laser marker 1 can suppress the number of laser beam W scanning lines in deburring, and hence minimize a period of time required for deburring.

Thus, when laser marker 1 according to the present embodiment is compared with laser marker 1A that deburrs a peripheral portion for each printed region, the former can suppress the number of laser beam W scanning lines in deburring, and hence minimize a period of time required for deburring.

### [Modified Example]

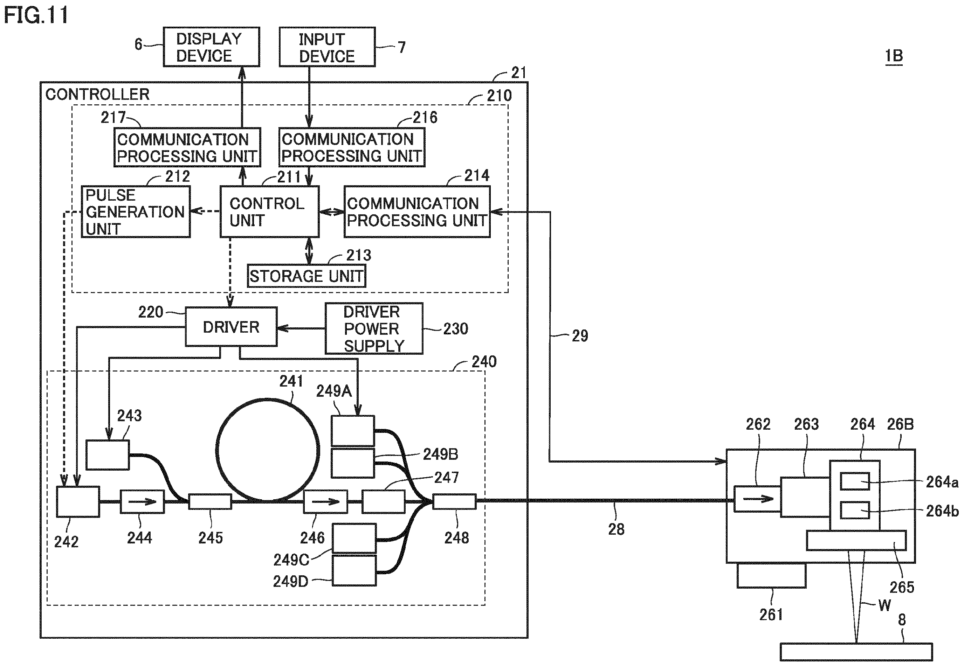

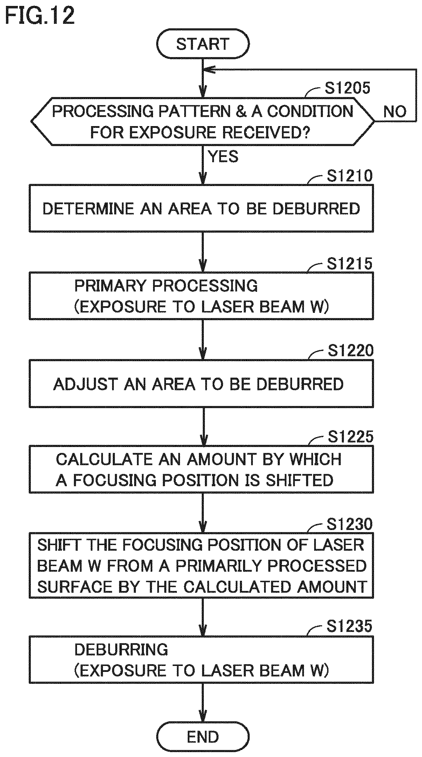

Laser marker 1 according to the above-described embodiment determines an area to be deburred based on a processing pattern received at communication processing unit 216. In contrast, a laser marker in a modified example uses image data of primarily processed workpiece 8 to adjust the area to be deburred as determined based on the processing pattern received at communication processing unit 216. Hereinafter, reference will be made to Figs. 11 and 12 to describe a feature of the laser marker of the modified example that is different from laser marker 1 of the above-described embodiment. Any configuration similar the above-described embodiment is identically denoted and will not be described repeatedly.

Fig. 11 shows a configuration of a laser marker 1B in a modified example. Laser marker 1B includes a marking head 26B with a camera unit 261. Camera unit 261 is connected to controller 21 via communication cable 29. Camera unit 261 captures an image of workpiece 8 in response to an instruction received from controller 21 via communication cable 29. Camera unit 261 obtains image data from capturing the image and sends the image data to controller 21 via communication cable 29. Control unit 211 receives via communication processing unit 214 the image data sent from camera unit 261.

A modified example of a deburring process by controller 21 will be described with reference to Figs. 11 and 12. Fig. 12 is a flowchart showing a modified example of the deburring process performed by controller 21. The Fig. 12 process is different from the Fig. 5 process in that, after the primary processing, the former performs a process for adjusting an area to be deburred (step S1220). Steps S1205 to S1215 are similar to steps S505 to S515 and steps S1225 to S1235 are similar to steps S520 to S530, and accordingly, in Fig. 12, only step S1220 will be described.

In step S1220, control unit 211 adjusts an area to be deburred. Specifically, control unit 211 causes camera unit 261 to capture an image of workpiece 8 primarily processed and obtain image data of a processing pattern formed on workpiece 8. Control unit 211 receives the image data from camera unit 261, and from the received image data calculates interval Q of exposure to laser beam W, and diameter R of processing by exposure to laser beam W. Based on the resultant calculation, control unit 211 adjusts an area determined in step S1210 to be deburred. An area to be deburred, as determined based on a processing pattern received at communication processing unit 216, may be slightly shifted from an area burred through actual printing (or the primary processing). Laser marker 1B according to the modified example adjusts an area to be deburred after the primary processing, and can resolve deviation of an area determined in step S1210 to be deburred from an area actually burred through printing.

Note that for laser marker 1B in the modified example, step S1210 may be dispensed with, and after the primary processing, an area to be deburred may be determined based on image data of workpiece 8 primarily processed.

Further, while in the above-described embodiment, in the Fig. 5 step S520, control unit 211 calculates an amount by which a focusing position of laser beam W is shifted, based on an output of laser beam W in the primary processing, or an output of laser beam W in the primary processing and a material of workpiece 8, laser marker 1B of the modified example may calculate an amount by which a focusing position of laser beam W is shifted, based on image data of workpiece 8 primarily processed. Specifically, control unit 211 causes camera unit 261 to capture an image of workpiece 8 primarily processed and obtain image data of a processing pattern formed on workpiece 8. Control unit 211 receives the image data from camera unit 261, calculates a burr's raised amount from the image data, and calculates an amount by which the focusing position of laser beam W is shifted, based on the raised amount.

Further, laser marker 1B in the modified example may calculate an amount by which a focusing position of laser beam W is shifted, based on an output of laser beam W in the primary processing or an output of laser beam W in the primary processing and a material of workpiece 8, and may adjust the calculated amount based on image data of workpiece 8 primarily processed.

Further, camera unit 261 may be replaced with a code verifier capable of communicating with laser marker 1B (more specifically, controller 21) and verifying a code in accordance with Direct Part Mark Quality Guideline (ISO29158) or the like. Further, camera unit 261 may be replaced with a camera of an image processing system employed in a process at a manufacturing site, and capable of communicating with laser marker 1B (more specifically, controller 21). When camera unit 261 is replaced with the code verifier or the camera of the image processing system, the code verifier or the camera of the image processing system captures an image of workpiece 8 primarily processed, and sends image data thereof to controller 21. Based on the image data, control unit 211 determines an area to be deburred, calculates an amount by which a focusing position of laser beam W is shifted, and/or the like.

### [Summary]

Laser marker 1 of the present embodiment and laser marker 1B in a modified example have thus been described. Laser markers 1 and 1B shift a focusing position of laser beam W from a primarily processed surface, and perform deburring in the same processing pattern as in the primary processing. Accordingly, the focusing position of laser beam W for the deburring is shifted from the processed surface, and the primary processing is not affected even when the deburring is performed without decreasing output power of laser beam W. Thus, laser markers 1 and 1B can perform deburring with large power, and hence in a minimal period of time.

Further, laser markers 1 and 1B subject an area in which a processing gap results to deburring in the same processing pattern as that applied in processing a workpiece, and when this is compared with deburring a peripheral portion for each printed region, the former can relatively suppress the number of laser beam W scanning lines, and as a result, allows deburring to be performed in a minimal period of time.

### [Appendix]

The present embodiment described above encompasses the following idea in the art.

### [Configuration 1]

A laser processing apparatus comprising:
an exposure unit (26, 26B) adapted to expose a workpiece (8) to a laser beam (W);
a reception unit (216) adapted to receive a processing pattern for the workpiece (8) and a condition for exposure to the laser beam (W); and
a control unit (211) adapted to control exposure to the laser beam (W) based on the processing pattern and condition for exposure received at the reception unit (216),
wherein after the workpiece (8) is processed based on the processing pattern, the control unit (211) subjects the workpiece (8) to deburring in a processing pattern identical to that applied in processing the workpiece (8), with the laser beam (W) focused to a position shifted from a processed surface of the workpiece (8).

### [Configuration 2]

The laser processing apparatus according to Configuration 1, wherein the control unit (211) performs the deburring while increasing an output power of the laser beam (W) to be larger than when processing the workpiece (8).

### [Configuration 3]

The laser processing apparatus according to Configuration 1 or 2, wherein the control unit (211) performs the deburring with the laser beam (W) focused to a position shifted toward the exposure unit (26, 26B) from the processed surface of the workpiece (8).

### [Configuration 4]

The laser processing apparatus according to any one of Configurations 1 to 3, wherein the control unit (211):
determines as a prescribed area an area of the processing pattern received at the reception unit (216) in which a processing gap results at a portion exposed to a plurality of laser beams (W) and thus processed for printing; and
subjects the prescribed area to the deburring.

### [Configuration 5]

The laser processing apparatus according to Configuration 4, wherein an area in which a processing gap results at a portion exposed to a plurality of laser beams (W) and thus processed for printing is an area of a pattern in which an interval (Q) of exposure to the laser beam (W) is larger than √2/2 times a diameter (R) of processing by exposure to the laser beam (W).

### [Configuration 6]

The laser processing apparatus according to Configuration 4 or 5, wherein the control unit (211) determines the prescribed area based on an output of the laser beam (W) applied in processing the workpiece (8).

### [Configuration 7]

The laser processing apparatus according to any one of Configurations 4 to 6, wherein the control unit (211) determines the prescribed area based on image data of the workpiece (8) processed in the processing pattern.

### [Configuration 8]

The laser processing apparatus according to any one of Configurations 1 to 7, wherein the control unit (211) calculates an amount by which the position to which the laser beam (W) is focused is shifted, based on an output of the laser beam (W) applied in processing the workpiece (8).

### [Configuration 9]

The laser processing apparatus according to Configuration 8, wherein the control unit (211) calculates an amount by which the position to which the laser beam (W) is focused is shifted, based on a material of the workpiece (8).

### [Configuration 10]

The laser processing apparatus according to any one of Configurations 1 to 9, wherein the control unit (211) calculates an amount by which the position to which the laser beam (W) is focused is shifted, based on image data of the workpiece (8) processed in the processing pattern.

### [Configuration 11]

A processing method using a laser processing apparatus (1, 1B) comprising:
an exposure unit (26, 26B) adapted to expose a workpiece (8) to a laser beam (W);
a reception unit (216) adapted to receive a processing pattern for the workpiece (8) and a condition for exposure to the laser beam (W); and
a control unit (211) adapted to control exposure to the laser beam (W) based on the processing pattern and condition for exposure received at the reception unit (216),
the processing method comprising:
   processing the workpiece (8) based on the processing pattern and condition for exposure received at the reception unit (216); and
   after the workpiece (8) is processed based on the processing pattern, deburring the workpiece (8) in a processing pattern identical to that applied in processing the workpiece (8), with the laser beam (W) focused to a position shifted from a processed surface of the workpiece (8).

While the present invention has been described in embodiments, it should be understood that the embodiments disclosed herein are illustrative and non-restrictive in any respect. The scope of the present invention is defined by the terms of the claims, and is intended to include any modifications within the meaning and scope equivalent to the terms of the claims.

## Claims

1. A laser processing apparatus comprising:
an exposure unit (26, 26B) adapted to expose a workpiece (8) to a laser beam (W);
a reception unit (216) adapted to receive a processing pattern for the workpiece (8) and a condition for exposure to the laser beam (W); and
a control unit (211) adapted to control exposure to the laser beam (W) based on the processing pattern and condition for exposure received at the reception unit (216),
wherein after the workpiece (8) is processed based on the processing pattern, the control unit (211) subjects the workpiece (8) to deburring in a processing pattern identical to that applied in processing the workpiece (8), with the laser beam (W) focused to a position shifted from a processed surface of the workpiece (8).

2. The laser processing apparatus according to claim 1, wherein the control unit (211) performs the deburring while increasing an output power of the laser beam (W) to be larger than when processing the workpiece (8).

3. The laser processing apparatus according to claim 1 or 2, wherein the control unit (211) performs the deburring with the laser beam (W) focused to a position shifted toward the exposure unit (26, 26B) from the processed surface of the workpiece (8).

4. The laser processing apparatus according to any one of claims 1 to 3, wherein the control unit (211):
determines as a prescribed area an area of the processing pattern received at the reception unit (216) in which a processing gap results at a portion exposed to a plurality of laser beams (W) and thus processed for printing; and
subjects the prescribed area to the deburring.

5. The laser processing apparatus according to claim 4, wherein an area in which a processing gap results at a portion exposed to a plurality of laser beams (W) and thus processed for printing is an area of a pattern in which an interval (Q) of exposure to the laser beam (W) is larger than √2/2 times a diameter (R) of processing by exposure to the laser beam (W).

6. The laser processing apparatus according to claim 4 or 5, wherein the control unit (211) determines the prescribed area based on an output of the laser beam (W) applied in processing the workpiece (8).

7. The laser processing apparatus according to any one of claims 4 to 6, wherein the control unit (211) determines the prescribed area based on image data of the workpiece (8) processed in the processing pattern.

8. The laser processing apparatus according to any one of claims 1 to 7, wherein the control unit (211) calculates an amount by which the position to which the laser beam (W) is focused is shifted, based on an output of the laser beam (W) applied in processing the workpiece (8).

9. The laser processing apparatus according to claim 8, wherein the control unit (211) calculates an amount by which the position to which the laser beam (W) is focused is shifted, based on a material of the workpiece (8).

10. The laser processing apparatus according to any one of claims 1 to 9, wherein the control unit (211) calculates an amount by which the position to which the laser beam (W) is focused is shifted, based on image data of the workpiece (8) processed in the processing pattern.

11. A processing method using a laser processing apparatus (1, 1B) comprising:
an exposure unit (26, 26B) adapted to expose a workpiece (8) to a laser beam (W);
a reception unit (216) adapted to receive a processing pattern for the workpiece (8) and a condition for exposure to the laser beam (W); and
a control unit (211) adapted to control exposure to the laser beam (W) based on the processing pattern and condition for exposure received at the reception unit (216),
the processing method comprising:
processing the workpiece (8) based on the processing pattern and condition for exposure received at the reception unit (216); and
after the workpiece (8) is processed based on the processing pattern, deburring the workpiece (8) in a processing pattern identical to that applied in processing the workpiece (8), with the laser beam (W) focused to a position shifted from a processed surface of the workpiece (8).
